# EUROPÄISCHE PATENTANMELDUNG

(11) **EP 1 589 173 A2**
(43) Veröffentlichungstag der Anmeldung: **26.10.2005**
(21) Anmeldenummer: 05007024.2
(22) Anmeldetag: 31.03.2005
(51) Int. Cl.: E05D 15/06

(54) **Verkleidungsanordnung, insbesondere Maschinenverkleidung, mit einer Schiebetür und Rollenführungsanordnung hierfür**

(30) Priorität: 22.04.2004 DE 102004019557; 18.02.2005 DE 102005007401; 20.01.2005 EP 05001091
(71) Anmelder: Bader GmbH & Co. KG, 89250 Senden (DE)
(72) Erfinder: Bader, Wilhelm, 89250 Senden (DE)
(74) Vertreter: Weber, Gerhard

(57) **Zusammenfassung**

Für eine Verkleidungsanordnung, insbesondere eine Maschinenverkleidung, mit einer Schiebetür wird eine vorteilhafte Ausführung einer Rollenführung angegeben.

## Beschreibung

Die Erfindung betrifft eine Verkleidungsanordnung, insbesondere eine Maschinenverkleidung, mit wenigstens einer Schiebetür und eine Rollenführungsanordnung.

Schiebetüren sind typischerweise an der Oberkante in eine Führungsschiene eingehängt und können zusätzlich an der Unterkante in einer weiteren Schiene geführt und/oder über Rollen auf dem Boden abgestützt sein.

Bei Maschinenverkleidungen mit Schiebetüren ist häufig die Verkleidung um den Arbeitsbereich eines Arbeitstisches angeordnet, wobei der Arbeitsbereich nach oben offen ist und daher keine Einhängemöglichkeit einer Schiebetür an deren Oberkante besteht, und die Schiebetür auch nicht bis zum Boden reicht und eine Abstützung durch Bodenrollen entfällt. Bei einer vom Anmelder entwickelten und z. B. in einem Prospektblatt "Bader Maschinenverkleidungen" vom November 2003 abgebildeten Maschinenverkleidung mit Schiebetüren ist eine Rollenführungsanordnung mit einer maschinenseitigen Schienenanordnung und einer türseitigen Wagenanordnung vorgesehen, bei welcher die Schienenanordnung eine gegen die Höhe der Schiebetür geringe Höhe aufweist. Die Tiefe der Schienenanordnung ist nochmals wesentlich geringer. Die Wagenanordnung auf Seiten der Schiebetür ist in deren unterem Bereich bei der Unterkante der Schiebetür angeordnet. In einem oberen Bereich der Schienenanordnung ist eine nach unten offene Führungsschiene und innerhalb der Schienenanordnung tiefer liegend eine weitere zur Seite offene Führungsschiene an einer gemeinsamen Trägerschiene befestigt. Die Führungsbahnen der Führungsschienen weisen einen konvex gewölbten Querschnitt auf, in welchem Rollen mit entsprechend gewölbten Laufflächen geführt sind. Die Rollenführungsanordnung nimmt dabei vorteilhafterweise sehr wenig Platz an der Maschine in Anspruch und fängt sowohl das Gewicht der Schiebetür als auch deren Kippmoment um die Verfahrrichtung ab. Über exzentrisch verstellbare Rollen in den jeweiligen Rollengruppen kann ein Führungsspiel minimiert oder auch eine leichte Vorspannung der Rollengruppe in den Führungsschienen eingestellt werden. Bei überlappend relativ zueinander verschiebbaren Doppeltüren kann die weiter von der Schienenanordnung beabstandete Tür mittels unter der anderen Tür durchgreifende Halterungen in die Schienenanordnung eingehängt sein. Die Wagenanordnungen sind dann in zwei Teilwagen unterteilt.

Der vorliegenden Erfindung liegt die Aufgabe zugrunde, eine weiter verbesserte derartige Verkleidungsanordnung mit einer Schiebetür sowie eine insbesondere hierfür geeignete Rollenführungsanordnung anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Ausstattung der Rollengruppe mit vertikalen Achsen, nachfolgend auch zweite Rollengruppe oder zweite Gruppe von Rollen benannt, mit zwei Teilgruppen mit jeweils mehreren Rollen erhöht zwar die Anzahl der insgesamt eingesetzten Rollen und erfordert eine weitere Führungsbahn in der Schienenanordnung und erscheint damit auf den ersten Blick aufwendiger, bringt aber überraschenderweise eine Reihe erheblicher Vorteile gegenüber der bekannten Anordnung.

Durch die nur radiale Abstützung der Rollen der beiden Teilgruppen in der oberen bzw. unteren Führungsbahn können sowohl die Rollen als auch die Führungsbahnen wesentlich einfacher und kostengünstiger ausgeführt sein. Die Rollen können als kostengünstige, stabile und leichtlaufende Stützrollen mit nur radialer Belastung des Rollenlagers und mit vorzugsweise kreiszylindrischer Rollenlauffläche ausgeführt werden, wogegen bei der bekannten Anordnung radial und axial belastete Führungsrollen mit auf die Führungsschienen speziell abgestimmten mehrflächigen oder im Querschnitt konvexen Laufflächen eingesetzt sind. Die obere und untere Führungsbahn können vorteilhafterweise zueinander und zu den Rollenachsen der Teilgruppen parallele ebene Flächen als Laufbahnen aufweisen und können einfach und kostengünstig durch Umformen eines Bleches hergestellt werden. Gemäß einer besonders vorteilhaften Ausführungsform sind obere und untere Führungsbahn einstückig in einer Profilschiene, insbesondere einer aus einem ebenen Blech durch Abwinkeln, insbesondere Abkanten, hergestellten Blechschiene ausgebildet. Die Profilschiene kann insbesondere die Form eines zu der Schiebetür bzw. der an dieser befestigten Wagenanordnung hin offenen C aufweisen.

Durch die nur radiale Abstützung der Rollen der beiden Teilgruppen in den jeweiligen Laufbahnen nehmen diese Rollen nur horizontale Kräfte auf. Die vertikalen Kräfte, insbesondere das Gewicht der Schiebetür, sind durch andere Elemente der Rollenführung abzufangen, was vorzugsweise durch die Rollengruppe mit horizontalen Rollenachsen, nachfolgend auch als erste Rollengruppe oder erste Gruppe von Rollen bezeichnet, erfolgt. Günstigerweise können auch diese Rollen der ersten Rollengruppe nur radial an einer zugehörigen Laufbahn abgestützt sein, da horizontale Kräfte eines Kippmoments um eine Verfahrrichtung bzw. Längsrichtung der Schienenanordnung durch die vertikal beabstandeten Teilgruppen der zweiten Rollengruppe zuverlässig abgefangen werden. Die erste Rollengruppe kann daher gleichfalls vorteilhafterweise Stützrollen mit nur radialer Lagerbelastung und vorzugsweise kreiszylindrischer Rollenlauffläche enthalten und einer ebenen Fläche als Laufbahn zugeordnet sein.

Gemäß einer bevorzugten Ausführung sind dann die Rollen in der ersten Rollengruppe zur Aufnahme vertikaler und in den Teilgruppen der zweiten Rollengruppe zur Aufnahme horizontaler Kraftkomponenten bei jeweils nur radialer Abstützung an den zugehörigen Laufbahnen ausgeführt und eingesetzt und die Laufbahnen jeweils als zu den Rollenachsen parallele Flächen ausgeführt. Die Rollenführungsanordnung kann auch insgesamt um einen Neigungswinkel, der vorteilhafterweise kleiner als 30° insbesondere kleiner als 15° ist, geneigt montiert sein. Typisch und nachfolgend als Standardfall angenommen ist jedoch die Montageausrichtung mit vertikal ausgerichteten Rollenachsen der zweiten Rollengruppe.

Die Führungsbahn mit der horizontalen Laufbahn für die erste Rollengruppe ist in einer vorteilhaften Ausführungsform als separate Profilschiene ausgeführt und an einer für die obere und untere Führungsbahn der beiden Teilgruppen der zweiten Rollengruppe gemeinsamen Führungsschiene befestigt. Die Führungsbahn für die erste Rollengruppe kann vorteilhafterweise als zur Schiebetür hin offenes U-Profil ausgeführt sein. Die Laufbahn für die erste Rollengruppe kann auch leicht nach unten geneigt sein, um das Abgleiten eventuell auf die Laufbahn fallender Späne oder anderer Partikel zu begünstigen. Die Rollenachsen der ersten Rollen sind dann vorteilhafterweise gleichfalls geneigt und parallel zu der Laufbahn. Der Neigungswinkel einer solchen eventuell gegebenen Neigung der Laufbahn für die erste Rollengruppe ist vorteilhafterweise kleiner als 30°, insbesondere kleiner als 15°.

Die durch die nur radiale Abstützung der Rollen in den Führungsbahnen vorteilhafterweise ebene Ausführung der Laufbahnen toleriert günstigerweise eine in begrenztem Umfang variable Positionierung der Rollen in den Führungsbahnen in Richtung der Rollenachsen. Dies ist beispielsweise von Vorteil hinsichtlich der Zusammensetzung der Schienenanordnung aus mehreren separaten Führungsbahnen für die unterschiedlichen Rollengruppen, insbesondere einer gemeinsamen Führungsschiene mit oberer und unterer Führungsbahn für die Teilgruppen der zweiten Rollengruppe und einer zusätzlichen, an der gemeinsamen Führungsschiene befestigten ersten Führungsschiene mit einer Laufbahn für die erste Rollengruppe. Geringe Abweichungen der relativen Positionen von gemeinsamer Führungsschiene und erster Führungsschiene beeinträchtigen die Funktion der Anordnung nicht. Entsprechendes gilt für Toleranzabweichungen der relativen Positionierung der verschiedenen Rollengruppen in der Wagenanordnung zueinander und/oder zu der Schienenanordnung. Die positionstolerante Lage der Rollen der verschiedenen Rollengruppen in den zugeordneten Führungsbahnen ist auch von Vorteil hinsichtlich eventuell gegebener unterschiedlicher Wärmeausdehnung einzelner Bestandteile der Rollenführungsanordnung. Eine relative Verschiebung der Rollengruppen in den Führungsbahnen aufgrund von Wärmeausdehnung beeinträchtigt die Funktion, insbesondere die Leichtgängigkeit und Präzision der Rollenführungsanordnung nicht.

Vorteilhafterweise enthält die zweite Rollengruppe wenigstens drei in Verfahrrichtung gegeneinander versetzte Rollen, von welchen wenigstens eine Rolle quer zur Verfahrrichtung und quer zur Rollenachse in geringem Maße verstellbar ist. Dies kann z. B. über einen exzentrisch zur Rollenachse ausgeführten Abschnitt eines Lagerbolzens realisiert sein, welcher mit dem exzentrischen Abschnitt in eine Bohrung der Wagenanordnung eingepasst ist. Derartige verstellbare Rollen sind kostengünstig verfügbar. Bei Aufteilung der Wagenanordnung in zwei Teilwagen, welche in Verfahrrichtung beabstandet sind, sind vorteilhafterweise an jedem Teilwagen Untergruppen der ersten Rollengruppe und der oberen und unteren Teilgruppe der zweiten Rollengruppe vorhanden. Jede der beiden Untergruppen der Teilgruppen der zweiten Rollengruppe, also der Rollengruppe mit den vertikalen Rollenachsen, enthält dabei vorteilhafterweise wenigstens zwei Einzelrollen, von welchen vorzugsweise jeweils wenigstens eine Rolle quer zur Verfahrrichtung und zur Rollenachse verstellbar ist.

Die Aufteilung der Wagenanordnung in zwei in Verfahrrichtung beabstandete Teilwagen ist an sich aus den eingangs genannten Maschinenverkleidungen des Anmelders bekannt und ermöglicht insbesondere die überlappende Verfahrung zweier Schiebetüren in derselben Schienenanordnung. Die Teilwagen der Wagenanordnung sind vorteilhafterweise wenigstens 50 %, insbesondere wenigstens 75 % der Breite der Schiebetür voneinander in Verfahrrichtung beabstandet und bevorzugt an entgegen gesetzten Rändern der Schiebetür angeordnet. Vorzugsweise sind die in Verfahrrichtung äußersten Rollen der einzelnen Rollengruppen, Teilgruppen oder Untergruppen nahe an den in Verfahrrichtung beabstandeten Seitenkanten der Schiebetür angeordnet.

Die erste Rollengruppe kann in einer ersten vorteilhaften Ausführung aus lediglich zwei in Verfahrrichtung beabstandeten Rollen bestehen, welche dann vorzugsweise weit auseinanderliegend, insbesondere hinsichtlich der Türbreite der Schiebetür randständig angeordnet sind. Die erste Führungsbahn der Schienenanordnung für die erste Rollengruppe kann in einfacher Ausführung lediglich als eine einzige Laufbahn unterhalb der Rollen der ersten Rollengruppe ausgeführt sein und die erste Rollengruppe vertikal abstützen. In bevorzugter Ausführungsform weist die erste Führungsbahn zwei vertikal beabstandete Führungsbahnen auf, zwischen welchen die erste Rollengruppe geführt ist, so dass auch ein Abheben der ersten Rollengruppe nach oben durch die erste Führungsbahn begrenzt oder verhindert ist. Die erste Rollengruppe kann dann auch wenigstens drei Rollen enthalten, von welchen vorzugsweise wenigstens eine quer zur Verfahrrichtung und quer zur Rollenachse verstellbar ist. Bei Aufteilung der Wagenanordnung in zwei beabstandete Teilwagen kann in einer ersten einfachen Ausführung jede je einem Teilwagen zugeordnete Untergruppe der ersten Rollengruppe lediglich eine Rolle, in bevorzugter Ausführung je wenigstens, insbesondere genau zwei Rollen, von welchen jeweils eine verstellbar ist, enthalten. Anstelle der Führungsbahn mit zwei die erste Rollengruppe zwischen sich einschließenden Laufbahnen der ersten Führungsbahn kann auch eine Führungsbahn vorgesehen sein, bei welcher ein Bahnstreifen voneinander abgewandt an einer Oberseite eine obere und an seiner Unterseite eine untere Laufbahn aufweist und die erste Rollengruppe mit vertikalem Versatz Rollen oberhalb und unterhalb des Bahnstreifens enthält.

In anderer vorteilhafter Ausführungsform kann eine Laufbahn für Rollen der ersten, Gruppe, an welcher über diese Rollen das Gewicht der Türanordnung vertikal abgestützt ist, einstückig mit wenigstens einer, vorzugsweise beiden Führungsbahnen für die Rollen der zweiten Gruppe ausgeführt sein. Insbesondere kann eine Laufbahn für Rollen der ersten Gruppe zwei Laufbahnen für Rollen einer Teilgruppe der zweiten Gruppe verbinden. In bevorzugter Ausführungsform kann die Schienenanordnung aus einer einstückigen Profilschiene mit C-förmigem Querschnitt bestehen.

Die Schienenanordnung ist vorteilhafterweise an dem Maschinentisch oder vorzugsweise einem diesen tragenden Maschinenrahmen der zu verkleidenden Maschine befestigt. Die Montagehöhe der Schienenanordnung ist vorteilhafterweise so gewählt, dass die Oberkante der Schienenanordnung unterhalb der Tischebene des Maschinentisches liegt, so dass der Zugang zur Teilfläche bei geöffneter Schiebetür durch die Schienenanordnung nicht behindert ist. Der Höhenabstand der Oberkante der Schienenanordnung gegen die Höhe der Tischebene ist vorzugsweise geringer als die Höhe der Schienenanordnung zwischen deren Oberkante und Unterkante. Die Höhe der Schienenanordnung ist typischerweise klein gegen die Höhe der Schiebetür und beträgt vorzugsweise weniger als 30 %, insbesondere weniger als 20 % der Türhöhe. Die Schienenanordnung und die türseitige Wagenanordnung sind vorteilhafterweise in einem unteren Bereich der Schiebetür, insbesondere an oder dicht bei deren Unterkante angeordnet. Der Schwerpunkt der Schiebetür liegt typischerweise höher als die Wagenanordnung Die Schiebetür ist gegen ihre Gewichtskraft und Kippmomente zumindest bei der Verfahrung entlang der Schienenanordnung nur über die Rollenführung abgestützt und insbesondere nicht zusätzlich im Bereich ihrer Oberkante gehalten oder geführt.

In anderer Variante der Erfindung kann eine Rollenführung an einer Maschinenverkleidung Rollen mit im wesentlichen horizontalen Rollenachsen besitzen, welche nichtzylindrische Laufflächen aufweisen und in nichtebenen Laufbahnen einer Führungsanordnung geführt sind und sowohl radial als auch axial bezüglich der Rollenachsen abstützend ausgeführt und angeordnet sind. Die Rollen sind dabei vorteilhafterweise zwei vertikal beabstandeten Teilgruppen mit jeweils einer eigenen von wenigstens zwei vertikal beabstandeten Führungsbahnen zugeordnet. Eine solche Anordnung ermöglicht eine Verkleidungsanordnung mit besonders geringer horizontaler Bautiefe quer zur Verfahrrichtung.

Die auf den vorzugsweise metallischen Laufflächen der Rollenbahnen in der Schienenanordnung abrollenden Laufflächen der einzelnen Rollen können vorteilhafterweise aus Metall oder insbesondere auch aus Kunststoff bestehen, wobei Kunststofflaufflächen auch durch aufsteckbare und/oder auswechselbare Kappen auf metallischen Rollen gebildet sein können.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht einer Schiebetür mit Schienenanordnung,
- Fig. 2: eine Verkleidungsanordnung mit teilweise geöffneter Schiebetür,
- Fig. 3: eine Wagenanordnung mit durchgehendem Trägerkörper,
- Fig. 4: einen Querschnitt einer Schienenanordnung mit einer Wagenanordnung,
- Fig. 5: einen weiteren Querschnitt einer Schienenanordnung,
- Fig. 6: eine Schiebetür mit zwei beabstandeten Teilwagen,
- Fig. 7: einen Teilwagen vergrößert,
- Fig. 8: einen Teilwagen in einer Schienenanordnung,
- Fig. 9: einen Rollenträger eines Teilwagens in bevorzugter Ausführung,
- Fig. 10: eine Anordnung mit einem Teilwagen nach Fig. 10 in einer Schienenanordnung,
- Fig. 11: eine Anordnung mit besonders geringer Bautiefe,
- Fig. 12: eine weitere vorteilhafte Anordnung.

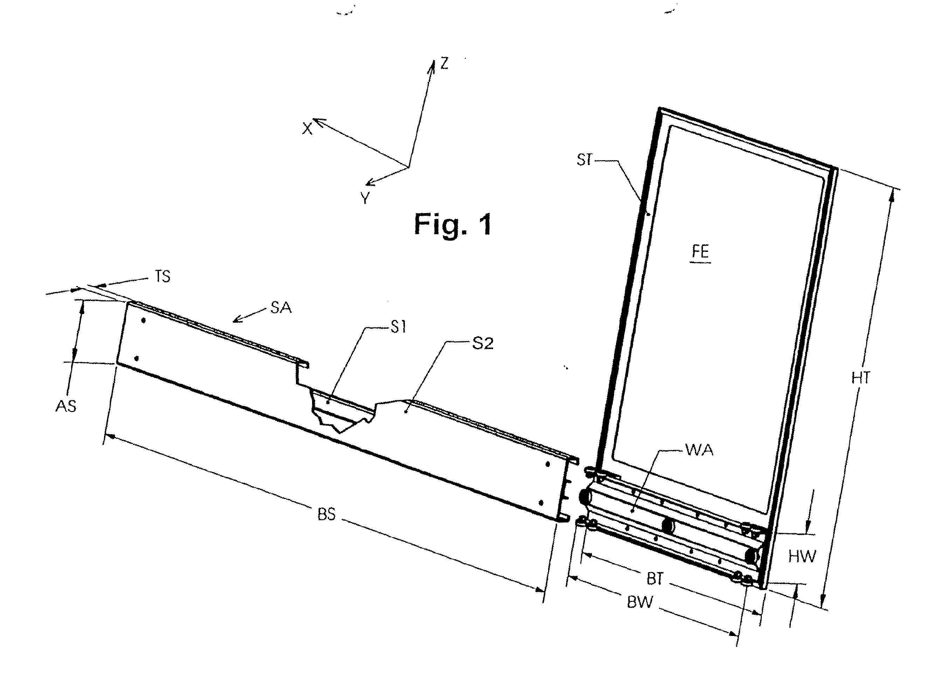

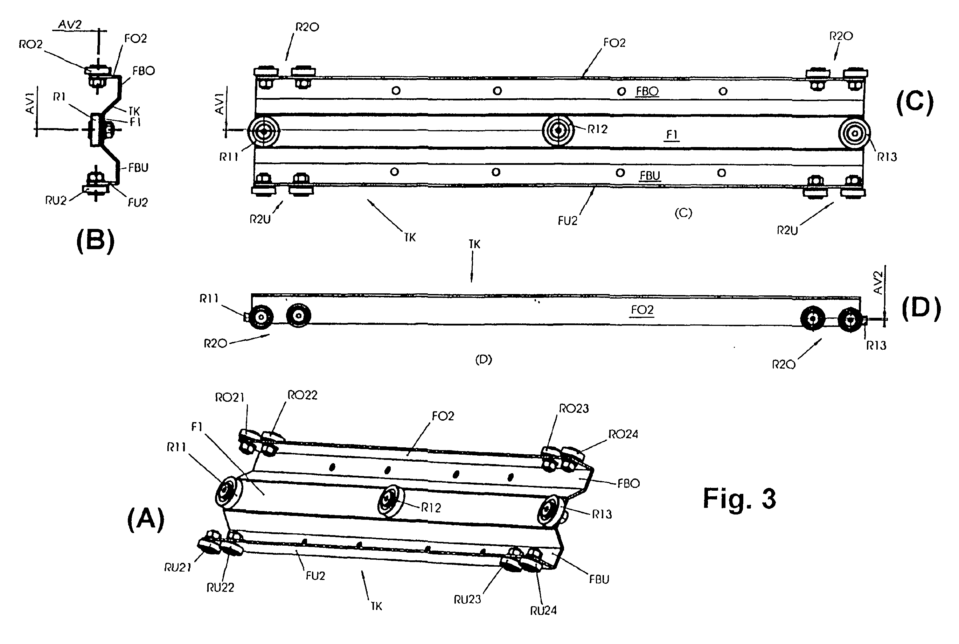

Die Fig. 1 zeigt in schrägperspektivischer Ansicht von der Maschinenseite her eine Schiebetür ST mit einer rollenbestückten Wagenanordnung WA und eine Schienenanordnung SA. Zur Hilfestellung für die weiteren Erläuterungen ist ein rechtwinkliges xyz-Koordinatensystem mit eingezeichnet. Die Schiebetür ST kann ein verglastes Sichtfenster FE enthalten. Die Türhöhe HT in z-Richtung und die Türbreite BT in x-Richtung können über einen weiten Bereich variieren. Typische Abmessungen liegen in Bereichen zwischen 0,5 m und 2,5 m. Das Verhältnis von Türhöhe zu Türbreite kann gleichfalls über einen weiten Bereich variieren. Die Wagenanordnung WA ist in einem unteren Bereich, insbesondere einem unteren Drittel, vorzugsweise einem unteren Viertel der Schiebetür ST an dieser befestigt. Im skizzierten Beispiel ist eine in x-Richtung durchgehend einteilige Wagenanordnung vorgesehen, deren Breite BW annähernd gleich der Türbreite BT ist. Die Höhe HW der Wagenanordnung ist klein gegen die Türhöhe und beträgt typischerweise weniger als 30 %, insbesondere weniger als 20 % der Türhöhe HT. Der Aufbau der Wagenanordnung im Detail ist anhand der Fig. 3 noch im Detail beschrieben. Die Schienenanordnung SA ist teilweise aufgeschnitten gezeichnet, um eine erste Führungsschiene S1, welche ansonsten in dieser Ansicht durch eine zweite Führungsschiene S2 verdeckt ist, zu zeigen. Die Breite BS der Schienenanordnung der SA ist vorteilhafterweise wenigstens annähernd doppelt so groß wie die Breite BT der Schiebetür ST, kann aber auch größer sein. Die Höhe HS der Schienenanordnung SA in z-Richtung ist ungefähr gleich der Höhe HW der Wagenanordnung WA. Die Tiefe TS der Schienenanordnung ist gering und beträgt vorteilhafterweise weniger als 50 mm. Die Tiefe TS der Schienenanordnung ist wesentlich geringer als die Höhe HS der Schienenanordnung. Die Höhe HS beträgt vorteilhafterweise wenigstens das 3fache der Tiefe TS. Die Schienenanordnung SA wird mit der in Fig. 1 sichtbaren Rückseite an einem Maschinentisch oder Maschinenrahmen befestigt, vorzugsweise verschraubt. Die erste Schiene S1 und die zweite Schiene S2 sind in definierter relativer Position verbunden, vorzugsweise miteinander verschweißt.

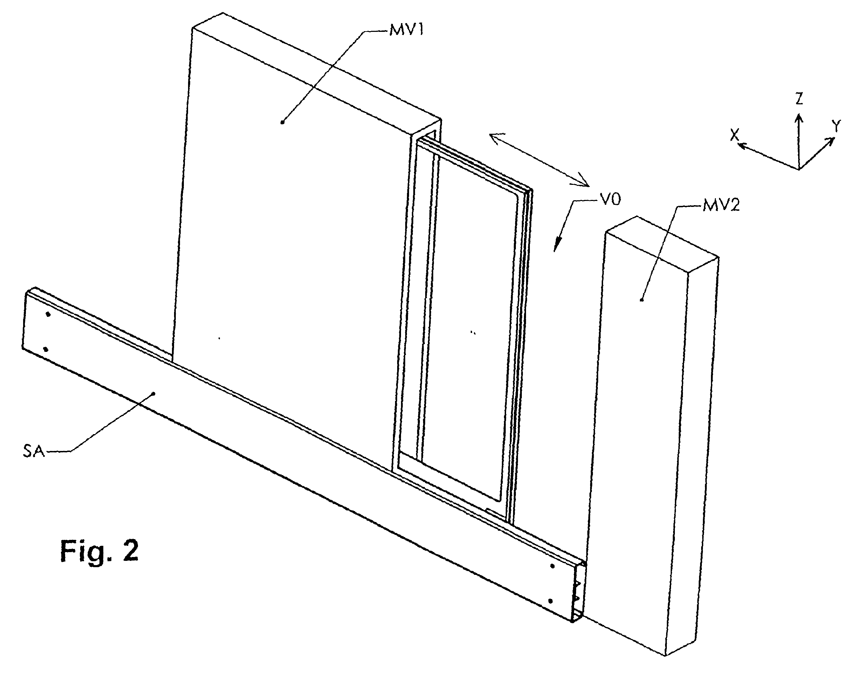

In Fig. 2 ist eine Situation mit in die Schienenanordnung eingesetzter Wagenanordnung und über die durch Schienenanordnung und Wagenanordnung gebildete Rollenführung in Längsrichtung x verfahrbarer Schiebetür ST skizziert. In Fig. 2 sind zusätzlich Umrisse einer Maschinenverkleidung mit Verkleidungsabschnitten MV1, MV2 skizziert, zwischen welchen eine Türöffnung VO frei ist. Die Schiebetür ST kann entlang der Schienenanordnung in x-Richtung zwischen einer geschlossenen Position, in welcher sie die Türöffnung VO überdeckt, und einer offenen Position, in welcher sie im wesentlichen vollständig vor dem Verkleidungsabschnitt MV1 auf dessen dem Benutzer zugewandter Seite liegt, verfahren werden. Die Schiebetür ist in Fig. 2 in einer Zwischenposition skizziert. Gewichtskräfte der Tür sowie Kippmomente der Tür aus deren Gewicht oder anderen Belastungen im Betrieb um alle Koordinatenachsen werden ausschließlich durch die Rollenführung mit der in der Schienenanordnung geführten Wagenanordnung aufgefangen.

In Fig. 3 ist in verschiedenen Ansichten ((A) Schrägansicht, (B), (C), (D) mit Blickrichtung in x- bzw. y- bzw. z-Richtung) eine bevorzugte Ausführung einer Wagenanordnung WA für eine Verkleidungsanordnung nach Fig. 1, Fig. 2 skizziert. Die Wagenanordnung weist einen in Längsrichtung x einstückig durchgehenden Trägerkörper TK in Form einer Profilschiene sowie eine Mehrzahl von Stützrollen auf. Die Stützrollen seien nachfolgend zur Unterscheidung aufgeteilt in eine erste Rollengruppe R1 und eine zweite Rollengruppe R2, welche wiederum unterteilt ist in eine obere Teilgruppe RU 2 und eine untere Teilgruppe RU2. Die Rollen R11, R12 und R13 der ersten Rollengruppe R1 sind mit horizontal, d. h. in y-Richtung weisenden Rollenachsen an einer vertikalen Fläche F1 des Trägerkörpers TK befestigt. Bei wenigstens einer der Rollen ist die Rollenachse exzentrisch gegen eine die Rollenposition bestimmende Bohrung in der Fläche F1 und die Lage der Rollenachse ist bei einer solchen verstellbaren Rolle in z-Richtung, d. h. quer zur Rollenachse und quer zur Verfahrrichtung x in begrenztem Umfang verstellbar. Die Rollenachse der mittleren Rolle R12 ist gegenüber den Rollenachsen der Rollen R11 und R13 um ein geringes Maß AV1 in z-Richtung nach oben versetzt. Die äußeren Rollen R11, R13 der ersten Rollengruppe sind in x-Richtung weit auseinander liegend positioniert und vorzugsweise nahe an den entgegen gesetzten Rändern des Trägerkörpers TK auf diesem befestigt. Die Rolle R12 ist vorteilhafterweise annähernd in der Mitte des Trägerkörpers in x-Richtung angeordnet. Die Rollen R021, R022, R023 und R024 der oberen Teilgruppe R02 der zweiten Rollengruppe sind an einer horizontalen oberen Fläche F02 des Trägerkörpers mit im wesentlichen vertikal ausgerichteten Rollenachsen befestigt. Vorzugsweise sind wiederum die in x-Richtung äußeren Rollen R021 und R024 weit voneinander beabstandet und insbesondere nahe an den entgegen gesetzten Rändern des Trägerkörpers bzw. dessen Fläche F02 befestigt. Abweichend von der Aufteilung der ersten Rollengruppe sind im skizzierten Beispiel der oberen Teilgruppe R02 der zweiten Rollengruppe zwischen den äußeren Rollen R021 und R024 zwei weitere Rollen R022 und R023 vorgesehen, welche nahe bei den äußeren Rollen angeordnet sind und gegen diese wiederum einen leichten horizontalen Achsversatz AV2 in y-Richtung zeigen. Die paarweise beieinanderliegenden Rollen können, im Vorgriff auf ein später noch im Detail zu beschreibendes Beispiel als Untergruppen innerhalb der Teilgruppe R02 angesehen werden. Vorteilhafterweise kann wiederum vorgesehen sein, dass in jeder Untergruppe wenigstens eine der Rollen quer zur Verfahrrichtung und quer zur Rollenachse, d. h. in diesem Fall in y-Richtung, um ein geringes Maß verstellbar ist. Eine untere Teilgruppe RU2 der zweiten Rollengruppe ist analog aufgebaut zu der oberen Teilgruppe R02, so dass auf die zu der Teilgruppe R02 gemachten Erläuterungen verwiesen wird. Während die Rollen der oberen Teilgruppe von der Befestigungsfläche F02 nach oben weisen, weisen die Rollen RU21, RU22, RU23 und RU24 von einer horizontalen unteren Befestigungsfläche FU2 des Trägerkörpers TK nach unten. Es können auch mehr Untergruppen als skizziert und/oder mehr Einzelrollen je Untergruppe vorgesehen sein. Die skizzierte Aufteilung ist aber besonders vorteilhaft.

Der Trägerkörper TK weist ferner noch eine obere vertikale Haltefläche FBO und eine untere vertikale Haltefläche FBU auf, über welche der Trägerkörper direkt oder über Zwischenelemente an der dem Benutzer abgewandten Seite der Schiebetür befestigt werden kann. Durch die vertikale Beabstandung der beiden Halteflächen ergibt sich eine stabile Verbindung zwischen Trägerkörper und Schiebetür, welche insbesondere auch zum Auffangen von Kippmomenten um die x-Achse vorteilhaft geeignet ist. Die Befestigungsfläche F1 für die Rollen der ersten Rollengruppe ist gegen die Halteflächen FBO, FBU in x-Richtung vom Benutzer weg und zu der Schienenanordnung SA hin versetzt, wodurch zum einen auf der der Schiebetür zugewandten Seite der Befestigungsfläche F1 Platz ist für die Befestigungsschrauben auf den Gewindebolzen der Stützrollen und zum anderen die Rollen selbst näher an die vertikale Rückwand der Schienenanordnung rücken, was für die Abstützung der Gewichtskraft der Tür in einer Führungsbahn für die erste Rollengruppe R1 vorteilhaft ist.

Wenn keine relevanten Kippmomente die Schiebetür um eine zur y-Richtung parallele Achse zu erwarten sind, kann die mittlere Rolle R12 der ersten Rollengruppe auch entfallen oder durch ein einfaches Anschlagelement ersetzt sein. In wieder anderer Ausführung können auch in der ersten Rollengruppe in x-Richtung beabstandete Untergruppen mit jeweils wenigstens zwei Rollen analog zu dem beschriebenen Aufbau der oberen und unteren Teilgruppe vorgesehen sein. Die Untergruppen können auch mehr als zwei, insbesondere drei Einzelrollen aufweisen.

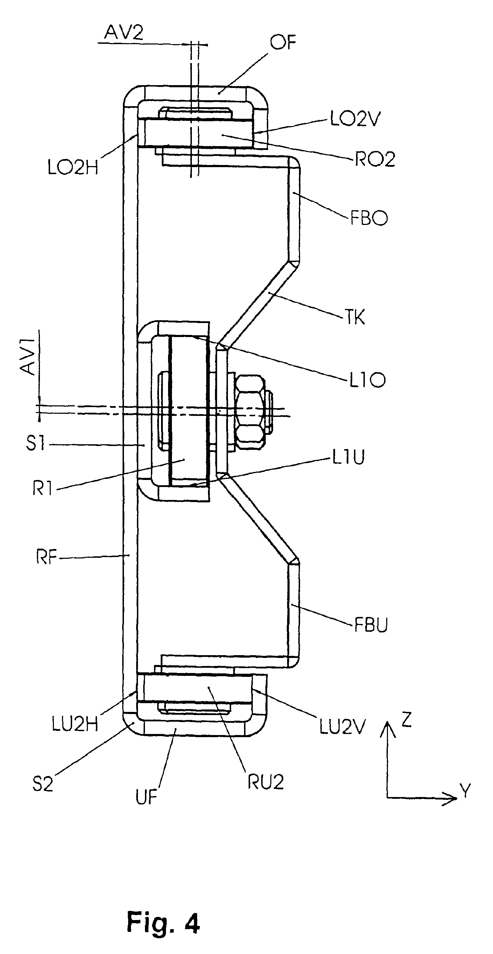

In Fig. 4 ist eine bevorzugte Ausführung einer Schienenanordnung mit einer eingesetzten Wagenanordnung der in Fig. 3 skizzierten Art mit Blickrichtung in x-Richtung dargestellt. Die Schienenanordnung enthält eine erste Führungsbahn für die Rollen der ersten Rollengruppe R1, eine obere zweite Führungsbahn für die Rollen der oberen Teilgruppe R02 und eine untere zweite Führungsbahn für die Rollen der unteren Teilgruppe RU2. Die obere zweite Führungsbahn ist durch einen U-förmigen, nach unten offenen Profilabschnitt gebildet, dessen über einen oberen Mittelabschnitt OF verbundene vertikale Profilschenkel an den einander zugewandten inneren Profilflächen eine vordere Laufbahn L02V und eine hintere Laufbahn bilden, wobei durch den Achsversatz AV2 der in Längsrichtung beabstandeten Einzelrollen der oberen Teilgruppe einige Rollen, z. B. R021 und R024, an der vorderen Laufbahn L02V und andere Rollen mit in y-Richtung versetzten Rollenachsen an der hinteren Laufbahn L02H abgestützt sind. Zwischen den Achsbolzen der Rollen und dem oberen verbindenden Mittelabschnitt OF besteht ein geringer Abstand, welcher zum einen Fertigungstoleranzen und zum anderen geringe vertikale Verschiebungen zwischen der Teilgruppe R02 und der oberen zweiten Führungsbahn, z. B. durch unterschiedliche Wärmeausdehnung von Schienenanordnung und Wagenanordnung zulässt.

In entsprechender Weise kann für die Rollen der unteren Teilgruppe RU2 eine untere zweite Führungsbahn in Form eines nach oben offenen U-förmigen Profilabschnitts vorgesehen sein, an deren über einen Mittelabschnitt UF verbundenen vertikalen Profilschenkeln eine vordere Laufbahn LU2V bzw. eine hintere Laufbahn LU2H ausgebildet sind. Der Freiraum zwischen den Achsbolzen der Rollen der Teilgruppe RU2 und dem Mittelabschnitt UF hat hier noch den besonderen Effekt, dass in den unteren Profilabschnitt einfallende kleinere Partikel, insbesondere Späne eines Materialbearbeitungsvorgangs, die Verfahrung der Wagenanordnung nicht beeinträchtigen. Der Mittelabschnitt UF kann für diesen Effekt auch tiefer gelegt sein als in der Skizze und/oder kann Durchbrüche aufweisen, durch welche derartige Partikel wieder nach unten ausfallen können.

Der untere und/oder der obere Profilabschnitt können in bevorzugter Ausführungsform durch Umformen, insbesondere Rollen oder Abkanten eines Blechabschnitts gebildet sein. Der obere und der untere Profilabschnitt sind vorteilhafterweise über eine vertikale Rückfläche RF miteinander verbunden und vorzugsweise mit dieser als einstückige, zur Wagenanordnung hin offene C-Schiene ausgeführt. Die Rückfläche kann, insbesondere in Form von Öffnungen zur Durchführung von Befestigungselementen, wie z. B. Schrauben zur Befestigung der Schiene S2 an einem Maschinenrahmen vorbereitet sein. Die Rückfläche RF ist im skizzierten bevorzugten Beispiel eben ausgeführt.

Eine erste Führungsbahn für die Rollen der ersten Rollengruppe R1 ist im Beispiel der Schienenanordnung nach Fig. 4 durch eine erste Schiene S1 in Form eines zur Wagenanordnung hin offenen U-Profils gebildet, deren innere Profilflächen eine untere Laufbahn L1U und eine obere Laufbahn L10 an den horizontalen Profilschenkeln bilden. Der die beiden Profilschenkel verbindende Mittelabschnitt dient vorteilhafterweise zur Befestigung, vorzugsweise Verschweißung der ersten Schiene an der der Wagenanordnung zugewandten Seite der Rückfläche RF der zweiten Schiene S2.

Die Rollen der ersten Rollengruppe stützen im wesentlichen das Gewicht der Schiebetür an der unteren Laufbahn L1 U ab. Bei mehr als zwei Rollen in der ersten Rollengruppe, wie im Beispiel nach Fig. 3 rollen vorteilhafterweise wenigstens zwei Rollen an der unteren Laufbahn L1 U ab, wobei diese Rollen vorteilhafterweise in Längsrichtung x weit beabstandet sind, wie z. B. die Rollen R11 und R13 nach Fig. 3. Das vertikale Spiel dieser beiden Rollen innerhalb der ersten Führungsbahn kann in ungünstigen Situationen zu einer geringfügigen, durch Anlage einer der beiden Rollen an der oberen Laufbahn L10 und/oder durch Anlage von Lagerbolzen von Rollen der oberen Teilgruppe an dem Mittelabschnitt OF begrenzten Kippbewegung der Schiebetür um eine zur y-Achse parallele Kippachse führen. Eine solche Kippbewegung kann von vorn herein unterbunden werden durch wenigstens eine weitere Rolle, wie z. B. die Rolle R12 im Beispiel nach Fig. 3, welche um einen Achsversatz AV1 vertikal gegen die auf der unteren Laufbahn L1 U abrollenden Rollen aufweist und gegebenenfalls auch mit leichter Vorspannung ständig an der oberen Laufbahn L10 anliegen und abrollen kann. Wenn eine solche Kippbewegung um eine zur y-Achse parallele Kippachse nicht zu erwarten oder wegen des geringen Kippspielraums nicht als gravierend bewertet ist, kann in der ersten Führungsbahn auch lediglich eine untere Laufbahn L1 U vorgesehen sein. Die Rollen der ersten Rollengruppe sind innerhalb der ersten Führungsbahn parallel zu ihren Rollenachsen in geringem Maß variabel positionierbar, was wieder vorteilhafterweise Positionstoleranzen zwischen den Positionen von erster Schiene S1 auf der Schienenanordnung und erster Rollengruppe auf der Wagenanordnung und/oder Positionsveränderungen durch Wärmeausdehnung zulässt. Die untere Laufbahn L1 U kann in anderer, nicht skizzierter Ausführung auch leicht zur Wagenanordnung hin nach unten geneigt verlaufen, um dem Ablagern von Partikeln auf dieser Laufbahn entgegen zu wirken. Vorteilhafterweise sind dann auch die Rollenachsen um denselben Winkel, welcher vorzugsweise gegen die Horizontale (y-Richtung) weniger als 30°, insbesondere weniger als 15° beträgt, geneigt und verlaufen wieder parallel zu der unteren Laufbahn. Die obere Laufbahn L10 ist dann gleichfalls geneigt und parallel zur unteren Laufbahn.

Die erste Führungsbahn liegt vorteilhafterweise vertikal zwischen der oberen und der unteren Führungsbahn und vorzugsweise in y-Richtung zwischen den vorderen und hinteren Laufbahnen der oberen und unteren Führungsbahn. Die Rollen der oberen und unteren Teilgruppen der zweiten Rollenanordnung weisen vorteilhafterweise einen kleinen Durchmesser auf, um die Tiefe der Schienenanordnung gering zu halten. Die Rollen der ersten Rollengruppe können demgegenüber einen größeren Durchmesser aufweisen.

Für die Ausbildung der Führungsbahnen und korrespondierende Anordnung der Rollen der verschiedenen Rollengruppen, insbesondere der ersten Rollengruppe sind abweichend von der vorstehend beschriebenen Ausführung verschiedene Varianten denkbar, welche den Vorteil der nur radialen Belastung der Rollen in den Führungsbahnen und somit die Wahl langlebiger, leichtlaufender und kostengünstiger Stützrollen beibehalten.

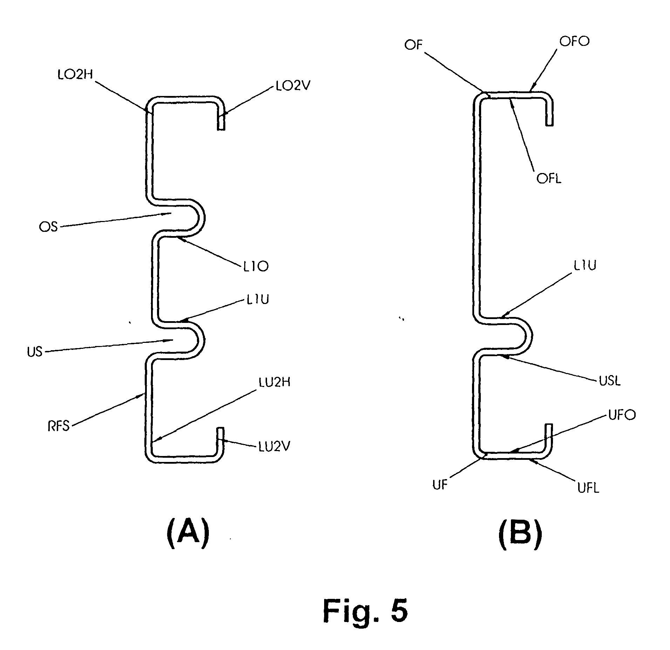

In Fig. 5 (A) ist beispielsweise eine aus nur einem ebenen Blech, z. B. durch Rollen und/oder Abkanten hergestellte Schienenanordnung dargestellt, bei welcher die oberen und unteren Führungsbahnen für die Rollen der oberen bzw. unteren Teilgruppe, wie in Fig. 4 als nach unten bzw. nach oben offene U-förmige Profilabschnitte ausgeführt sind. Die Rückfläche RFS bildet in Form einer oberen Schleife OS und einer unteren Schleife US zwei Vorsprünge in Richtung der Wagenanordnung bzw. der Schiebetür. Die beiden Vorsprünge bilden mit einander zugewandten, vertikal beabstandeten Laufbahnen L10 und L1 U eine Führungsbahn für die erste Rollengruppe mit der Funktion der ersten Schiene S1 nach Fig. 4. Es ist hier vorteilhafterweise lediglich ein geringes Blechteil umzuformen.

In Fig. 5 (B) ist eine abgewandelte Form zu Fig. 5 (A) skizziert, bei welcher nur ein unterer Vorsprung US von der Rückfläche zur Schiebetür hin ausgebildet ist, welcher mit seinem oben liegenden Abschnitt eine untere Laufbahn L1 U für die erste Rollengruppe entsprechende weitere Laufbahn benötigt oder gewünscht wird, um auch kleinen Kippbewegungen um eine zur y-Achse parallele Kippachse vorzubeugen, kann eine solche weitere Laufbahn z. B.
- durch die nach unten weisende Fläche OFL des oberen Mittelabschnitts OF gebildet sein, wofür wenigstens eine Rolle der ersten Rollengruppe vertikal nach oben und in x-Richtung gegen die Rollen der oberen Teilgruppe R02 versetzt angeordnet wird.,
- durch die nach unten weisende Fläche USL des unteren Abschnitts US gebildet sein, wofür wenigstens eine Rolle der ersten Rollengruppe vertikal nach unten versetzt unterhalb des Vorsprungs US angeordnet ist,
- durch die nach unten weisende Fläche UFL des unteren Mittelabschnitts UF gebildet sein, wofür wenigstens eine Rolle der ersten Rollengruppe unterhalb der Unterkante der ersten Schiene angeordnet ist.

Auch für die die Gewichtskraft der Schiebetür an einer Laufbahn der ersten Führungsbahn abstützenden, wenigstens zwei Rollen R11, R13 der ersten Rollengruppe können anders angeordnet sein und sich z. B. an der nach oben weisenden Fläche OFO des oberen Mittelabschnitts OF oder an der nach oben weisenden Fläche OFO des unteren Mittelabschnitts UF abstützen, so dass u. U. auf eine gesonderte Struktur, wie die Vorsprünge OS, US oder die erste Schiene S1 für die erste Führungsbahn verzichtet werden kann.

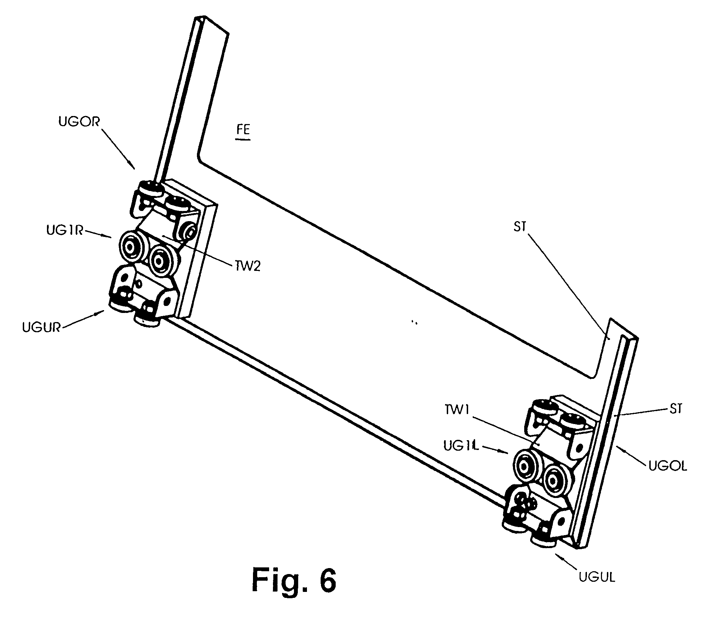

In Fig. 6 ist eine Wagenanordnung im unteren Bereich einer Schiebetür skizziert, bei welcher zwei in Verfahrrichtung x beabstandete, insbesondere maximal auseinander liegende Teilwagen TW1, TW2 vorgesehen sind, welche jeweils Untergruppen der ersten Rollengruppe und der Teilgruppen der zweiten Rollengruppe enthalten. Jede Untergruppe UGOR, UGOL, UGUR, UGUL der Teilgruppen der zweiten Rollengruppe enthält vorteilhafterweise wenigstens zwei, vorzugsweise genau zwei Einzelrollen, von welchen vorteilhafterweise jeweils wenigstens eine Einzelrolle in y-Richtung verstellbar ist. Die Verteilung der Rollen der zweiten Rollengruppen ist in der Wagenanordnung nach Fig. 6 im wesentlichen gleich wie in der Wagenanordnung nach Fig. 3, wobei aber kein in Verfahrrichtung durchgehendes Profil als Trägerkörper vorgesehen ist, sondern zwei beabstandete Teilwagen TW1, TW2. Die Auftrennung der Wagenanordnung in zwei Teilwagen ist insbesondere von Vorteil für die in x-Richtung überlappende Verfahrung zweier in y-Richtung gegeneinander versetzten Schiebetüren mit in Verfahrrichtung versetzten und ineinander greifenden Wagenanordnungen mit jeweils zwei getrennten Teilwagen in derselben Schienenanordnung. Für die dem Benutzer zugewandte Schiebetür sind Teilwagen insbesondere ausgebildet mit einem die Unterkante der dem Benutzer abgewandt liegenden Schiebetür untergreifenden Trägern. Die Aufteilung der Wagenanordnung in zwei Teilwagen ist an sich aus dem eingangs genannten Stand der Technik bekannt.

Die Untergruppen UG1 R, UG1 L der ersten Rollengruppe mit den im wesentlichen horizontalen Rollenachsen enthalten jeweils wenigstens eine Rolle. Eine zweite Rolle in jeder dieser Untergruppen kann mit Achsversatz AV1 in z-Richtung vorgesehen sein, um in der beschriebenen Weise eine Kippbewegung der Tür zu verhindern.

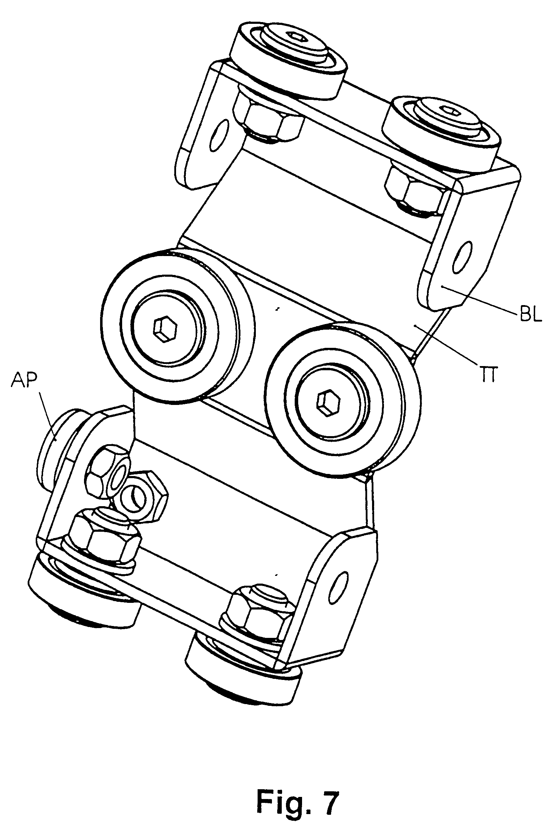

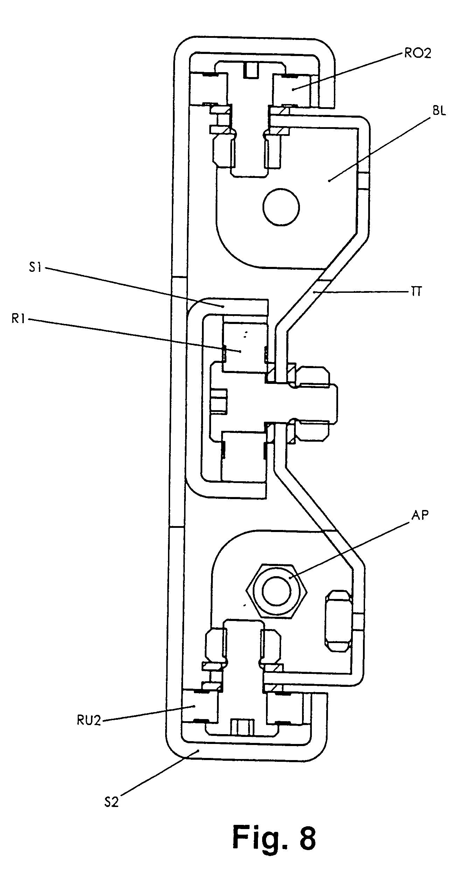

In Fig. 7 ist in Schrägansicht eine bevorzugte Ausführung eines Teilwagens skizziert, bei welcher ein Trägerkörper TT, welcher vorteilhafterweise einstückig aus einem abgewinkelten Blech besteht, die dem Trägerkörper TK nach Fig. 3 entsprechenden Flächenabschnitte zur Befestigung von Rollen und zur Befestigung des Teilwagens an der Schiebetür aufweist. Zusätzlich zu der besonders vorteilhaften, mehrfach abgekanteten Profilform wie zu Fig. 3 ausführlich beschrieben können vorteilhafterweise in den Winkeln zwischen oberen und unteren Befestigungsflächen für die Rollen und den vertikalen Halteflächen zur Befestigung des Teilwagens an der Tür noch umgebogene Laschen BL vorgesehen sein, welche z. B. zur Aussteifung des Profils und/oder zur Befestigung von Anschlagpuffern AP dienen können. Fig. 8 zeigt ein Schnittbild durch eine Rollenführung mit einem Teilwagen nach Fig. 7 in einer Schienenanordnung wie in Fig. 4. Der in Fig. 7 und Fig. 8 skizzierte Teilwagen ist durch die einfach herzustellende und kompakte Ausführung besonders vorteilhaft.

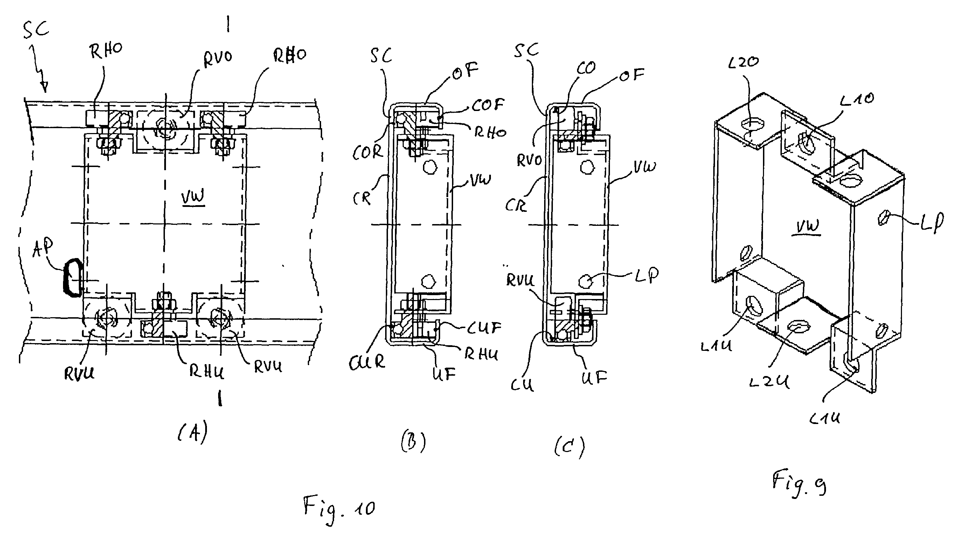

Fig. 9 zeigt einen Trägerkörper für Rollen eines Teilwagens entsprechend Fig. 7 in anderer Ausführung. Wesentlicher Unterschied gegenüber der Ausführung nach Fig. 7 ist, dass die Laufbahnen für die Rollen der ersten Gruppe nicht in einem vertikalen Abschnitt zwischen den Laufbahnen der vertikal beabstandeten Teilgruppen der zweiten Gruppe von Rollen liegen, sondern mit diesen auf annähernd gleicher Höhe.

Der Trägerkörper nach Fig. 9 ist in der Schrägdarstellung der Übersichtlichkeit halber ohne die Rollen gezeichnet. Die Rollen und deren Ausrichtung ergeben sich aus den eingezeichneten Lagerbohrungen L10, L1 U, L20 und L2U. Der Trägerkörper ist vorteilhafterweise aus einem ebenen Blechzuschnitt durch mehrfaches Abkanten herstellbar. Insbesondere sind die einzelnen Flächenabschnitte mit den Lagerbohrungen zur Aufnahme der Rollenachsen in Fortsatzflächen einer Wandplatte VW ausgebildet. Die Wandplatte VW weist im eingebauten Zustand der Schiebetür zu und ist vorteilhafterweise auf einer vertikalen Wandfläche der Schiebetür befestigt. In Seitenflächen mit parallel zur x-Richtung liegender Flächennormale sind wiederum Öffnungen LP zur Befestigung von Anschlagpufferelementen vorgesehen.

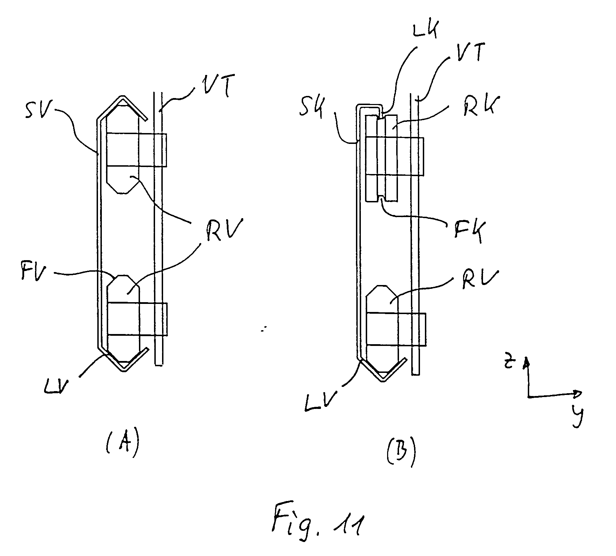

In Fig. 10 ist ein Teilwagen mit einem Träger nach Fig. 9 einschließlich der darauf befestigten Rollen in einem in eine Schienenanordnung eingesetzten Zustand in einer Blickrichtung y auf die Wandfläche VW (Ansicht A) sowie in zwei Ansichten in x-Richtung als gestufte Teilschnitte auf Höhe von Rollen RHO, RHU mit vertikaler Rollenachse (Fig. 10 (B)) bzw. Rollen RVO, RVU mit horizontaler Rollenachse (Fig. 10 (C)) gezeigt.

Die Schienenanordnung besteht in dieser bevorzugten Ausführungsform lediglich aus einer einteiligen Profilschiene mit im Querschnitt nach Fig. 10 (B) bzw. Fig. 10 (C) C-förmigem Profil. Die Profilschiene SC entspricht damit im wesentlichen der Schiene S2 nach Fig. 4, wobei in der Ausführung nach Fig. 9 und Fig. 10 keine zusätzliche Schiene als Führungsbahn für vertikal abgestützte Rollen der ersten Rollengruppe vorgesehen ist.

Die Rollen RHO, RHU der zweiten Rollengruppe mit vertikalen Rollenachsen entsprechen in Funktion und in vertikaler Anordnung weitgehend den Rollen R02 und RU2 der zweiten Rollenanordnung nach Fig. 4. Im skizzierten Beispiel enthält die zweite Rollengruppe mit den vertikalen Rollenachsen in einer unteren Rollengruppe lediglich eine Rolle RHU und in einer oberen Rollengruppe zwei Rollen RHO. Die Führung der Rollen der Teilgruppen der zweiten Rollengruppe mit den vertikalen Rollenachsen kann im wesentlichen wieder wie bei den bereits beschriebenen Ausführungsbeispielen erfolgen. Insbesondere bilden einerseits Flächen der Rückwand CR der Profilschiene SC eine obere hintere Laufbahn COR bzw. eine untere hintere Laufbahn CUR und diesen in y-Richtung horizontal beabstandet gegenüber stehende Innenflächen von vertikal abgewinkelten Schenkeln des C-Profils bilden eine vordere obere Laufbahn COF bzw. eine vordere untere Laufbahn CUF.

Bei der oberen Teilgruppe mit Rollen RHO kann wieder vorgesehen sein, dass eine der Rollen in y-Richtung verstellbar ist, um eine der Rollen RHO an der hinteren Laufbahn COR und eine andere der Rollen RHO an der vorderen Laufbahn COF anliegen zu lassen. Die beiden Rollen RHO können aber auch mit in x-Richtung fluchtenden bzw. in y-Richtung um gleiche Maße von der Wandfläche VW beabstandeten Positionen ihrer Rollenachsen angeordnet sein. Ein geringes Spiel der Rollen zwischen den gegenüber stehenden Laufbahnen in der Größenordnung von Bruchteilen von Millimetern kann dabei bewußt in Kauf genommen werden. Auch für die untere Rolle RHU der unteren Teilgruppe der zweiten Rollengruppe ergibt sich, wenn nicht weitere besondere Maßnahmen vorgesehen sind, ein solches geringes Spiel von Millimeterbruchteilen in y-Richtung.

Die vorderen und hinteren Laufbahnen COR, CUR bzw. COF bzw. CUF für die oberen und unteren Rollen der zweiten Rollengruppe sind durch horizontale Profilschenkel OF bzw. UF mit der Rückwand CR der Profilschiene SC verbunden. Diese vertikalen Profilschenkel dienen in der Ausführung nach Fig. 9 und Fig. 10 vorteilhafterweise zugleich mit ihren Innenflächen als untere Rollenlaufbahn CU für die unteren Rollen RVU der ersten Rollengruppe bzw. als obere Laufbahn CO für die oberen Rollen RVO der ersten Rollengruppe. Das Gewicht der mit wenigstens zwei Teilwagen verbundenen Schiebetür wird dabei ausschließlich durch die unteren Rollen RVU der ersten Rollenanordnung auf der Laufbahn CU des unteren Profilschenkels UF abgestützt. Die oberen Rollen RVO der ersten Rollenanordnung dienen in erster Linie dazu, ein Verkippen der Tür um eine zur y-Achse parallele Achse zu verhindern. Die oberen Rollen RVO liegen daher typischerweise nur ausnahmsweise beim Verschieben der Schiebetür an der oberen Lauffläche CO an. Die oberen Rollen RVO können daher auch durch eine einfachere Kippbegrenzung, beispielsweise eine von der Wandfläche VW fortgesetzte Lasche ersetzt sein oder, wenn kein Kippmoment um eine zur y-Richtung parallele Kippachse zu erwarten ist, auch ganz entfallen. In anderer Ausführung können die vertikal beabstandeten Rollen RVU, RVO der ersten Rollengruppe auch zur vertikal spielfreien Führung leicht vorgespannt in der Profilschiene SC geführt sein, wobei insbesondere eine die obere Rolle RVO dieser Rollengruppe tragende Lasche federnd nachgiebig ausgeführt sein kann. Auch bei den Rollen der zweiten Rollengruppe können einzelne Rollen begrenzt federnd nachgiebig gelagert sein und unter elastischer Vorspannung an den Laufflächen anliegen.

Die zu den vorhergehenden Ausführungsbeispielen gegebenen Anmerkungen zu Abwandlungen der konkret skizzierten Beispiele sind, insbesondere hinsichtlich der Rollen der ersten Gruppe und der durchgehenden oder in zwei Teilwagen unterteilten Wagenanordnung auch auf das Beispiel nach Fig. 9 und 10 übertragbar. Rollen der ersten Gruppe können auch auf der äußeren oberen Fläche des oberen horizontalen Profilschenkels OF laufen und vertikal abgestützt sein.

In Fig. 11 ist eine Rollenführungsanordnung mit besonders geringer Bautiefe in y-Richtung in zwei Ausführungen (A) und (B) skizziert. Typisch an diesen Rollenführungen ist, dass die eingesetzten Rollen in den Rollenlagern sowohl radial als auch axial abgestützt und in Führungsbahnen gleichfalls radial und axial bezüglich der Rollenachsen geführt sind. Beispiel der Fig. 11 (A) sind Rollen RV benutzt, deren nicht ebene Rollenlaufflächen von den axialen Rändern her im Querschnitt zur Mitte der Rollenlaufflächen hin konisch aufeinander zu verlaufende, gegen die Rollenachse schräg geneigte Rollenlaufflächen besitzen. Die Rollenführungen in einer Profilschiene SV, welche vorteilhafterweise als Profilschiene durch Abkanten oder Rollen oder sonstige Verform eines ebenen Bleches hergestellt ist, sind den Rollenlaufflächen angepasste Laufbahnen in gegen y- und z-Richtung geneigter Ausrichtung vorgesehen. Die Rollen RX, deren Rollenachsen auf einer Trägerplatte VT befestigt sind, sind mit ihren Rollenlaufflächen FV sowohl radial als auch axial in definierter Position in der Profilschiene SV geführt. Es sind wiederum obere und untere Teilgruppen von Rollen vorgesehen, welche in entsprechend vertikal beabstandeten eigenen Führungsbahnen der Profilschiene SV geführt sind.

In Fig. 11 (B) ist eine Ausführung skizziert, bei welcher Rollen einer oberen Teilgruppe eine andere, nicht zylindrische Form der Rollenlauffläche FK mit einer Vertiefung der Rollenlauffläche zur axialen Mitte der Rolle hin aufweisen. In diese Vertiefung der Rollenlauftlächen FK der Rollen RK der oberen Teilgruppe greift ein nach unten abgewinkelter Fortsatz der Profilschiene SK als Führungsbahn LK ein. Die Rollen RK der oberen Teilgruppe sind im wesentlichen bezüglich ihrer Rollenachsen axial belastet, um ein Verkippen einer Schiebetüranordnung um eine zur Verschieberichtung parallele Kippachse zu verhindern. Eine radiale Belastung dieser Rollen tritt, wenn sie nicht mit elastischer Vorspannung an der oberen Führungsbahn anliegen, nur ausnahmsweise bei einer Kippbelastung der Schiebetüranordnung bei Verfahren in x-Richtung auf.

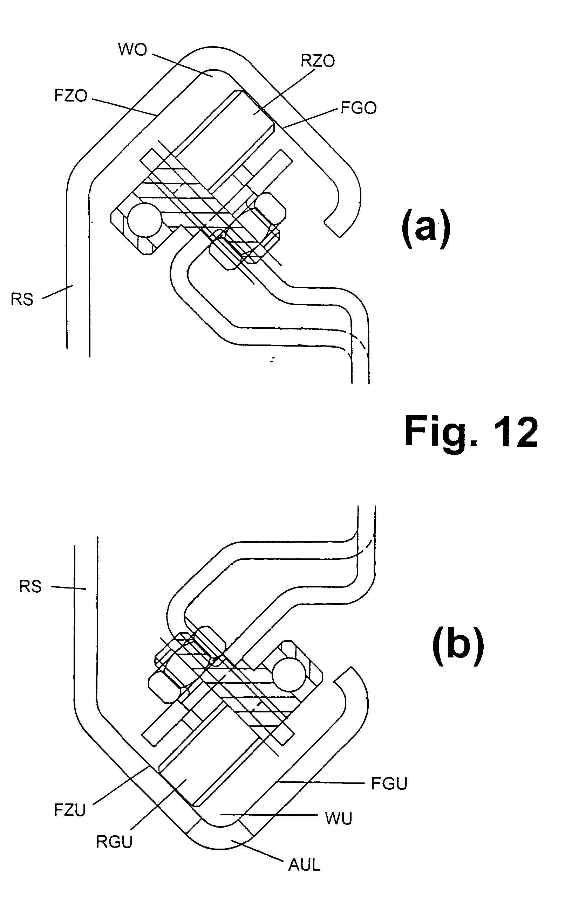

Fig. 12 zeigt eine weitere vorteilhafte Form einer Rollenführungsanordnung mit einer Führungsschiene, welche nach beiden Seiten gegen die Vertikale geneigte Laufbahnen FGO. FZO in einem oberen Führungsbereich (Fig. 12a) und FGU, FZU in einem unteren Führungsbereich (Fig. 12b) aufweist. Die Rollenachsen erster und zweiter Rollen in oberem bzw. unterem Führungsbereich sind gleichfalls gegen die Vertikale geneigt und im wesentlichen parallel zu den Laufbahnen, so dass die Rollen wiederum nur radial belastet sind. Die Neigungswinkel der Laufbahnen und Rollenachsen gegen die Vertikale bzw. allgemein gegen die Rückfläche RS der C-förmigen Führungsschiene SCK liegt vorteilhafterweise zwischen 30° und 60°, vorzugsweise bei ±45°. Die Neigungswinkel verschiedener Laufbahnen können abweichend von der Skizze nach Fig. 12 unterschiedlich sein.

In Fig. 12 ist ein oberer Laufbahn-Führungsbereich der Führungsschiene SCK mit einer vorderen geneigten Laufbahn FGO für eine erste obere Rolle RZO mit zu FGO paralleler Rollenachse und mit einer Laufbahn FZO für eine nicht eingezeichnete zweite obere Rolle mit zu FZO paralleler Rollenachse dargestellt.

In entsprechender Weise weist die Führungsschiene SCK in einem unteren Führungsbereich nach Fig. 12b eine vordere geneigte Laufbahn FGU für eine nicht eingezeichnete erste untere Rolle und eine Laufbahn FZU für eine zweite untere Rolle RGU.

Die Winkel WO oben bzw. WU unten zwischen den unterschiedlich geneigten Laufbahnen dienen nicht als Laufflächen und können daher zusätzliche Strukturen aufweisen oder zur Befestigung weiterer Bauteile herangezogen werden. Beispielsweise können in dem unteren Winkel Aussparungen AUL vorgesehen sein, durch welche in die Führungsschiene einfallende Späne oder andere Partikel ausgeworfen werden können, z. B. durch eine mit der Rollenanordnung mitbewegte Bürstenanordnung, Kehrlippe oder dergleichen. Entsprechende Ausfallöffnungen können auch in Anordnungen mit vertikalen und horizontalen Stützflächen und Laufflächen in dem unteren Führungsbereich in dem hinteren und/oder vorderen Winkel der U-Form der Führungsschiene vorgesehen sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Die Rollenführung ist nicht nur in der Anwendung für die Schiebetür einer Maschinenverkleidung, sondern auch anderweitig vorteilhaft einsetzbar.

## Patentansprüche

1. Verkleidungsanordnung, insbesondere Maschinenverkleidung, mit wenigstens einer entlang einer Schienenanordnung geführt verfahrbaren Schiebetür, wobei die Höhe der Schienenanordnung gering ist gegen die Höhe der Schiebetür, und wobei eine türseitige Wagenanordnung eine erste Gruppe von Rollen mit horizontalen Achsen und eine zweite Gruppe von Rollen mit vertikalen Achsen enthält, wobei jede Gruppe mehrere in Verfahrrichtung beabstandete Rollen aufweist, welche in Führungsbahnen der Schienenanordnung laufen, **dadurch gekennzeichnet, dass** die zweite Gruppe von Rollen zwei vertikal beabstandete Teilgruppen mit jeweils mehreren Rollen aufweist, dass für die beiden Teilgruppen eine eigene obere und untere Führungsbahn in der Schienenanordnung vorliegen, und dass die Rollen der Teilgruppen bezüglich der Rollenachsen nur radial in den Führungsbahnen abgestützt sind.

2. Anordnung nach Anspruch 1, **dadurch gekennzeichnet, dass** die Schienenanordnung sich in Höhe eines unteren Bereichs der Schiebetür befindet.

3. Anordnung nach Anspruch 1 oder 2, **dadurch gekennzeichnet, dass** die Höhe der Schienenanordnung weniger als 30 %, insbesondere weniger als 20 % der Höhe der Schiebetür beträgt.

4. Anordnung nach einem der Ansprüche 1 bis 3, **dadurch gekennzeichnet, dass** der Schwerpunkt der Schiebetür höher liegt als die Schienenanordnung.

5. Anordnung nach einem der Ansprüche 1 bis 4, **dadurch gekennzeichnet, dass** die obere und die untere Führungsbahn gemeinsam an einer einstükkigen Schiene ausgebildet sind.

6. Anordnung nach einem der Ansprüche 1 bis 5, **dadurch gekennzeichnet, dass** die obere und/oder die untere Führungsbahn durch ein umgebogenes Blech mit zwei einander zu weisenden, die Rollen der jeweiligen Teilgruppe zwischen sich einschließenden Laufbahnen gebildet ist.

7. Anordnung nach einem der Ansprüche 1 bis 6, **dadurch gekennzeichnet, dass** die Rollen beider Teilgruppen auf einem gemeinsamen Träger der Wagenanordnung befestigt sind.

8. Anordnung nach Anspruch 7, **dadurch gekennzeichnet, dass** der gemeinsame Träger durch ein abgewinkeltes Blech gebildet ist.

9. Anordnung nach Anspruch 7 oder 8, **dadurch gekennzeichnet, dass** der gemeinsame Träger an der einem Benutzer abgewandten Seite der Schiebetür befestigt ist.

10. Anordnung nach einem der Ansprüche 1 bis 9, **dadurch gekennzeichnet, dass** jede Teilgruppe wenigstens drei Rollen enthält.

11. Anordnung nach einem der Ansprüche 1 bis 10, **dadurch gekennzeichnet, dass** wenigstens eine der Rollen jeder Teilgruppe quer zur Rollenachse und zur Verfahrrichtung verstellbar ist.

12. Anordnung nach einem der Ansprüche 1 bis 11, **dadurch gekennzeichnet, dass** die Wagenanordnung zwei Teilwagen aufweist, welche in Verfahrrichtung beabstandet sind, und an jedem der beiden Teilwagen Untergruppen der Rottengruppen bzw. Teilgruppen vorgesehen sind.

13. Anordnung nach Anspruch 12, **dadurch gekennzeichnet, dass** der gegenseitige Abstand der Teilwagen wenigstens 50 %, insbesondere wenigstens 75 % der Breite der Schiebetür beträgt.

14. Anordnung nach Anspruch 12 oder 13, **dadurch gekennzeichnet, dass** an jedem der beiden Teilwagen zu wenigstens einer Untergruppe der Teilgruppen der zweiten Rollengruppe wenigstens zwei Rollen vorhanden sind.

15. Anordnung nach einem der Ansprüche 1 bis 14, **dadurch gekennzeichnet, dass** die erste Gruppe von Rollen in einer eigenen ersten Führungsbahn geführt und dort nur vertikal abgestützt ist.

16. Anordnung nach Anspruch 16, **dadurch gekennzeichnet, dass** die erste Führungsbahn als separate Schiene an einer die obere und untere Führungsbahn aufweisenden Führungsschiene befestigt ist.

17. Anordnung nach Anspruch 15 oder 16, **dadurch gekennzeichnet, dass** die erste Führungsbahn ein zur Schiebetür hin offenes U-Profil bildet.

18. Anordnung nach einem der Ansprüche 15 bis 17, **dadurch gekennzeichnet, dass** die erste Führungsbahn vertikal zwischen der oberen und der unteren Führungsbahn und beabstandet zu beiden angeordnet ist.

19. Anordnung nach einem der Ansprüche 1 bis 18, **dadurch gekennzeichnet, dass** die erste Gruppe von Rollen und die beiden Teilgruppen der zweiten Gruppe von Rollen auf einen gemeinsamen Rollenträger der Wagenanordnung befestigt sind.

20. Anordnung nach Anspruch 19, **dadurch gekennzeichnet, dass** der gemeinsame Rollenträger durch ein abgewinkeltes Blech gebildet ist.

21. Anordnung nach Anspruch 21, **dadurch gekennzeichnet, dass** das Blech annähernd einen Sigma (∑)-Querschnitt aufweist.

22. Anordnung nach einem der Ansprüche 1 bis 14, **dadurch gekennzeichnet, dass** die Rollen der ersten Gruppe auf einer Laufbahn (CU) laufen und vertikal abgestützt sind, welche einstückig mit den Führungsbahnen der zweiten Gruppe ausgeführt ist.

23. Anordnung nach Anspruch 22, **dadurch gekennzeichnet, dass** die Laufbahn (CU) für Rollen der ersten Gruppe horizontal beabstandete Laufbahnen für Rollen der zweiten Gruppe mechanisch verbindet.

24. Anordnung nach Anspruch 22 oder 23, **dadurch gekennzeichnet, dass** die erste Gruppe zwei vertikal beabstandete Teilgruppen von Rollen enthält.

25. Anordnung nach einem der Ansprüche 22 bis 24, **dadurch gekennzeichnet, dass** die Schienenanordnung durch eine einstückige Schiene mit C-förmigem Querschnitt gebildet ist.

26. Verkleidungsanordnung, insbesondere Maschinenverkleidung mit wenigstens einer entlang einer Schienenanordnung geführt verfahrbaren Schiebetür, wobei die Höhe der Schienenanordnung gering ist gegen die Höhe der Schiebetür, und wobei eine türseitige Wagenanordnung mehrere Rollen mit horizontalen Achsen enthält, welche in Führungsbahnen der Schienenanordnung laufen, **dadurch gekennzeichnet, dass** die Laufbahnen der Führungsbahnen nichteben und die Laufflächen der Rollen nichtzylindrisch ausgeführt sind, dass die Rollen auf den Führungsbahnen und in den Rollenlagern sowohl radial als auch axial abgestützt sind und dass wenigstens zwei vertikal beabstandete Führungsbahnen vorhanden sind.

27. Anordnung nach einem der Ansprüche 1 bis 21, **dadurch gekennzeichnet, dass** die Laufflächen wenigstens mehrerer Rollen aus Kunststoff bestehen.

28. Rollenführungsanordnung, insbesondere für eine Verkleidungsanordnung nach einem der Ansprüche 1 bis 25 mit einer Schienenanordnung und einer in der Schienenanordnung längsverfahrbar geführten Wagenanordnung mit einer ersten Gruppe von Rollen mit horizontalen Achsen und einer zweiten Gruppe von Rollen mit vertikalen Achsen und mit mehreren in Verfahrrichtung beabstandeten Rollen in jeder Gruppe und mit Führungsbahnen für die Rollen in der Schienenanordnung, **dadurch gekennzeichnet, dass** die zweite Gruppe von Rollen zwei vertikal beabstandete Teilgruppen mit jeweils mehreren Rollen aufweist, dass für die beiden Teilgruppen eine eigene obere und untere Führungsbahn in der Schienenanordnung vorliegen, und dass die Rollen der Teilgruppen in den Führungsbahnen nur radial abgestützt sind.
